Europäisches Patentamt

European Patent Office

Office européen des brevets

(19)

(11) Numéro de publication : **0 396 592 B1**

(12) **FASCICULE DE BREVET EUROPEEN**

(45) Date de publication du fascicule du brevet :
25.11.92 Bulletin 92/48

(51) Int. Cl.⁵ : **G06F 15/30,** G07F 7/08, G07F 7/10

(21) Numéro de dépôt : **89900843.7**

(22) Date de dépôt : **28.12.88**

(86) Numéro de dépôt international :
**PCT/FR88/00643**

(87) Numéro de publication internationale :
**WO 89/06398 13.07.89 Gazette 89/15**

(54) **DISPOSITIF D'ANALYSE D'UNE TRANSACTION INFORMATIQUE.**

(30) Priorité : **29.12.87 FR 8718269**

(43) Date de publication de la demande :
**14.11.90 Bulletin 90/46**

(45) Mention de la délivrance du brevet :
**25.11.92 Bulletin 92/48**

(84) Etats contractants désignés :
**AT BE CH DE FR GB IT LI LU NL SE**

(56) Documents cités :
**GB-A- 2 020 074**
**GB-A- 2 154 346**
**GB-A- 2 189 064**

(56) Documents cités :
**US-A- 4 449 040**
**IBM Technical Disclosure Bulletin, vol. 27, No. 10A, March 1985, (New York, US), "Personal authentication code generation",pages 5576-5578 see the whole document.**

(73) Titulaire : **MICHAUD, André**
**27E, avenue du Plessis**
**F-92290 Chatenay-Malabry (FR)**

(72) Inventeur : **MICHAUD, André**
**27E, avenue du Plessis**
**F-92290 Chatenay-Malabry (FR)**

(74) Mandataire : **Rodhain, Claude et al**
**Cabinet Claude Rodhain 30, rue la Boétie**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif d'analyse d'une transaction informatique ou partie de transaction informatique.

De façon générale, ce dispositif reçoit en entrée des signaux comprenant des informations délivrées par un utilisateur demandant l'exécution de la transaction informatique, ainsi que des informations de contexte représentatives des conditions de déroulement de la transaction.

En fonction de ces deux types d'informations, le dispositif délivre en sortie des signaux de commande à des moyens de décision déterminant s'il y a lieu ou non de modifier le déroulement de cette transaction ou de transactions suivantes, ou même d'arrêter complètement ou partiellement le processus et le service rendu à l'utilisateur.

On connait de tels dispositifs d'analyse, qui sont utilisés dans diverses applications telles que le contrôle d'accès physique ou logique, ou encore la délivrance d'autorisations et de services, de distribution de billets ou de services pour des cartes accréditives.

De façon très schématique, il s'agit, à partir des informations fournies par l'utilisateur (données personnelles, etc.) et des conditions dans lesquelles ces informations sont délivrées (succession d'essais infructueux, nombre élevé de transactions sur un intervalle de temps réduit, etc.), de déterminer si la demande d'éxécution de la transaction est ou non une demande "anormale" - c'est à dire révélatrice d'une tentative de fraude, d'abus ou de malveillance - et, dans l'affirmative, de prendre les décisions qui s'imposent de la manière la plus appropriée, à savoir interdire l'exécution de la transaction, en modifier le déroulement, mémoriser l'apparition de cette situation et attendre la prochaine demande d'exécution de transaction pour intervenir, etc.

Le dispositif selon l'invention s'applique de façon générale aux problèmes d'analyse de fraudes ou de tentatives de fraude, par exemple lorsque l'on souhaite, à partir d'un nombre d'informations plus ou moins corrélées avec le phénomène à mettre en évidence, isoler un ensemble restreint d'opérations, déclarations ou événements afin d'améliorer la détection et la répression des fraudes.

La détermination du caractère anormal ou non d'une demande d'exécution de transaction est déterminée par une série de règles prédéterminées, fondées principalement sur des analyses statistiques.

Néanmoins, jusqu'à présent, ces règles étaient définies de façon plus ou moins empirique, sans fil conducteur, de sorte qu'elles n'aboutissaient pas, dans tous les cas, à une optimalisation de la décision prise.

En outre, il est nécessaire d'utiliser un nombre élevé de signaux pour réaliser une bonne discrimination des transactions anormales : dans un système expert de traitement de données bancaires délivrant des autorisations de paiement, il est ainsi courant d'utiliser jusqu'à un millier de règles, du fait que le nombre d'événements anormaux (correspondant à quelques centaines de tentatives de fraudes par mois) est extrêmement faible par rapport au nombre d'événements normaux (plusieurs millions de transactions régulières).

De la sorte, le "bruit de fond" informationnel est considérable et rend très difficile la révélation des demandes de transaction effectivement anormales, si ce n'est en prévoyant une marge de sécurité telle que l'on sera amené à refuser une proportion significative de transactions régulières, mais réalisées dans des conditions atypiques.

En outre, l'analyse statistique oblige à mémoriser un volume d'informations considérable : par exemple, dans le cas des cartes accréditives, on stocke la totalité des transactions effectuées sur une période supérieure à une semaine par la totalité des porteurs de cartes, qui sont couramment de plusieurs millions.

L'un des buts de la présente invention est de pallier ces inconvénients et de dépasser ces limitations, en proposant un dispositif d'analyse présentant les avantages suivants :

- diminution du nombre de règles, typiquement dans un rapport de cinq à dix par rapport aux systèmes classiques, et ceci sans perte sur le résultat, c'est à dire sans perte sur la "qualité" ou "pertinence" de la décision prise,
- pour chacune des règles, possibilité de simplifier la règle, toujours sans perte sur le résultat, ce qui permet de diminuer aussi bien le volume d'informations que le temps de transmission et de traitement,
- optimalisation des règles entre elles, permettant d'aboutir directement aux résultats optimaux théoriques, ce qui réduit au minimum théorique le "taux de fausses alarmes" et le "taux de non-détection" ,
- volume d'information à stocker très inférieur, dans la mesure où l'on ne traitera et conservera que la partie significative de l'information, évitant donc le recours à un stockage de masse de données brutes,
- auto-adaptativité du système en fonction de l'évolution des données statistiques,
- très grande vitesse d'obtention des signaux de commande des moyens de décision, en raison de la limitation du volume d'informations, comme expliqué plus haut, cette vitesse étant encore accrue dans les modes de mise en oeuvre particuliers utilisant des circuits convoluteurs, que l'on décrira plus en détail dans la suite de la description.

A cet effet, le dispositif d'analyse de la présente invention est caractérisé par :

- des moyens extracteurs, pour ne conserver, parmi les informations reçues en entrée, que celles utiles à l'analyse de la transaction,
- des moyens suppresseurs, pour éliminer les signaux correspondant à une transaction considérée comme conforme à un ensemble de règles prédéterminées, de manière à ne pas poursuivre l'analyse pour les transactions de ce type,
- des moyens de filtrage, pour éliminer, en fonction des caractéristiques statistiques des signaux délivrés par les moyens suppresseurs, les variations non significatives de la transaction à analyser,
- des moyens de classement, pour répartir les signaux de la transaction à analyser en sortie des moyens de filtrage dans une ou plusieurs classes d'au moins un ensemble de classes, chaque ensemble correspondant à un critère prédéterminé de classification, ces moyens de classement délivrant en sortie les signaux de commande des moyens de décision.

Selon un certain nombre de caractéristiques avantageuses :
- le dispositif comprend des moyens d'archivage assurant la mémorisation des signaux correspondant à des transactions antérieures ;
- les moyens de filtrage sont des moyens à effet variable, commandés par des moyens de calcul et de réglage fonctionnant en réponse au contenu des moyens d'archivage ;
- les moyens de classement sont des moyens à effet variable, commandés par des moyens de calcul et de réglage fonctionnant en réponse au contenu des moyens d'archivage ;
- les informations transmises aux moyens extracteurs comprennent des signaux représentatifs de l'écart entre les conditions effectives de déroulement de la transaction et les conditions considérées comme normales du déroulement de cette transaction ;
- le signal représentatif dudit écart est un signal de distance quantifiant l'écart plus ou moins grand entre les conditions effectives de déroulement de la transaction et les conditions considérées comme normales du déroulement de cette transaction;
- il est prévu une pluralité de moyens de classement disposés en parallèle, recevant en entrée les mêmes signaux et délivrant chacun en sortie des signaux spécifiques à des moyens combinatoires formant interface avec les moyens de décision ;
- le dispositif étant installé au moins partiellement dans un équipement d'un système distribue, un équipement du système reçoit des signaux en provenance des dispositifs d'analyse d'équipements voisins, ces signaux, qui comportent au moins un signal d'alarme, constituant des signaux d'entrée du dispositif d'analyse de cet équipement.

A cet égard, on peut noter que le fractionnement du dispositif entre plusieurs points du système permet, notamment, de décentraliser les décisions et donc de diminuer les coûts, les files d'attente, etc.
- dans ce dernier cas, le signal transmis à chaque équipement voisin est transmis avec application d'une fonction du temps comportant un retard, cette fonction dépendant de l'éloignement de cet équipement par rapport à l'équipement ayant émis le signal correspondant. les signaux de commande délivrés comprennent au moins un signal d'alarme transmis aux équipements voisins du système distribué, ce signal d'alarme transmis constituant un signal d'entrée pour les dispositifs d'analyse de ces équipements voisins.

Le dispositif de la présente invention est susceptible de nombreuses applications, parmi lesquelles les plus avantageuses sont, de façon non limitative :
- le contrôle d'accès physique (locaux protégés, zones sécurisées, etc),
- le contrôle d'accès logique : accès aux bases de données, messageries, réseaux d'information, etc,
- les transactions bancaires en général, notamment celles effectuées par les distributeurs automatiques de billets et guichets automatiques bancaires,
- la délivrance d'autorisations de paiement aux utilisateurs de cartes accréditives,
- les modules sécurisés : il s'agit d'une variante particulière du contrôle d'accès logique appliqué aux "boîtes noires" de chiffrement et déchiffrement, dans lesquelles un dispositif interne au module analyse les signaux d'entrée à chiffrer ou déchiffrer afin de détecter si la manière dont ces signaux sont appliqués correspond à une utilisation normale du module sécurisé ou non, par exemple lorsqu'un utilisateur non habilité tente de découvrir la clef de chiffrement en envoyant des séries particulières successives de signaux ; le dispositif de l'invention analysera ces signaux (messages incohérents, inattendus, fréquences anormales, délais de réponse non conformes, etc.) pour détecter une fraude éventuelle et auto-neutraliser le module sécurisé en cas de fraude avérée.

On va maitenant décrire en détail le dispositif de l'invention en référence aux figures annexées, puis en donner un exemple d'application pratique dans la description détaillée qui va suivre.

Sur les figures:
- la figure 1 est un schéma fonctionnel illustrant le contexte d'utilisation du dispositif de l'invention,
- la figure 2 montre l'ensemble des différents blocs fonctionnels

- la figure 3 illustre les moyens de filtrage,
- la figure 4 illustre les moyens de classement, et
- la figure 5 illustre les moyens de mise en forme assurant l'interfaçage avec les moyens de décision,
- les figures 6 et 7 illustrent l'application du dispositif de l'invention à la propagation d'alarme dans un système distribué.

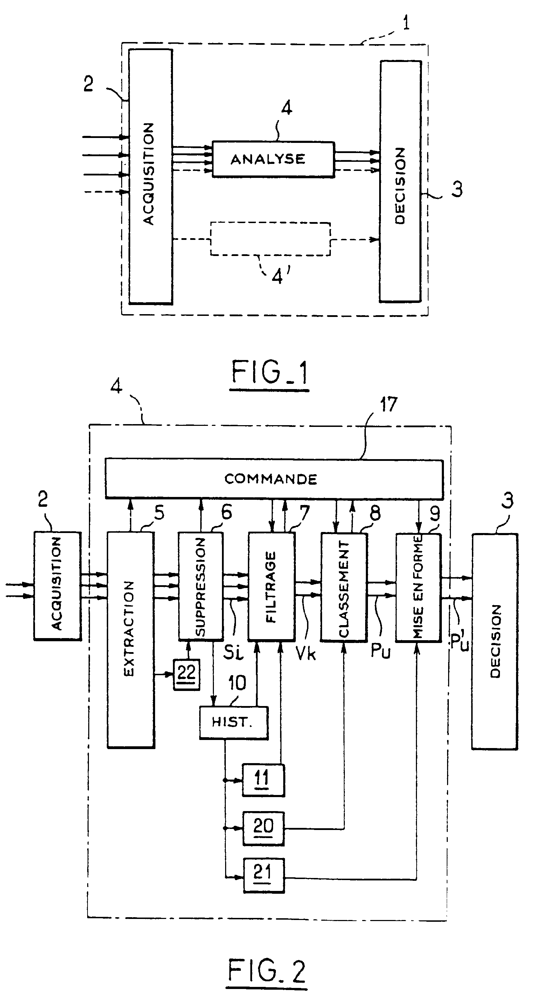

La figure 1 représente, de façon schématique, un système informatique 1 comprenant des moyens 2 d'acquisition de données relatives à l'exécution d'une transaction, et des moyens de décision 3 déterminant, en fonction des données acquises par les moyens 2, s'il y a lieu ou non de délivrer une autorisation permettant de poursuivre la transaction, de modifier le déroulement de cette transaction, ou de modifier le déroulement de transactions ultérieures.

Le dispositif 4 d'analyse selon l'invention reçoit en entrée les signaux délivrés par les moyens d'acquisition 2 et délivre des signaux de commande aux moyens de décision 3.

Les moyens d'acquisition sont de type classique et ne seront pas décrits en détail ; ils peuvent comprendre des capteurs, convertisseurs, modems, lecteurs de support d'information (cartes magnétiques ou à microcircuit par exemple), claviers de saisie de données, etc.

Les moyens de décision 3 servent à exploiter les résultats qui leur sont fournis par le dispositif d'analyse 4 de l'invention, cette décision pouvant être prise de façon automatique ou humaine (il s'agit alors d'un système particulier d'aide à la décision) ou encore mixte, c'est à dire automatique mais permettant l'intervention occasionnelle d'un opérateur.

*Configuration générale du dispositif d'analyse*

La figure 2 représente plus en détail la stucture du dispositif d'analyse 4 de l'invention qui comprend, d'amont en aval, des moyens extracteurs 5, des moyens suppresseurs 6, des moyens de filtrage 7, des moyens de classement 8 et des moyens de mise en forme 9.

Le rôle des moyens extracteurs 5 est de collecter et mettre en forme tous les signaux discriminants dont on peut disposer dans le système d'information 1 (on appelera "signal discriminant" tout signal parcipant à la prise de décision finale, quelle que soit la part plus ou moins grande pour laquelle il intervient dans cette décision).

L'un des avantages de la présente invention est de pouvoir utiliser de façon exhaustive tous les signaux discriminants, même ceux qui ne le sont que faiblement alors que, dans les réalisations antérieures on ne conservait généralement que les signaux fortement discriminants afin d'en limiter le nombre.

Les signaux discriminants peuvent être de natures très diverses:
- on peut utiliser, de façon classique, une information du type "tout ou rien", c'est à dire définissant si une relation est vérifiée ou non, si un seuil fixé est atteint ou non, s'il y a identité ou non entre une information délivrée et sa valeur de consigne, etc. ;
- on peut également, et de façon particulièrement avantageuse, utiliser au lieu d'une telle information binaire un signal mesurant l'écart entre la situation réelle et une situation "normale", ou l'écart entre l'information et sa valeur de consigne, etc. La théorie de l'information de Shannon ainsi que les systèmes de codes détecteurs ou correcteurs d'erreurs de Hamming donnent de nombreux exemples de telles mesures de "distance" entre informations, et l'on ne décrira pas plus en détail la manière d'obtenir de telles valeurs, technique en elle-même connue (différence mathématique, nombre de bits faux, distance de Hamming, nombre de caractères faux, coefficient de corrélation, etc.), le choix de la manière de calculer cette distance dépendant en fait de l'application pratique et du type de signal envisagé ;
- il peut également s'agir du nombre d'accès à des ressources (bases de données, fourniture de produits ou de services, nombre d'utilisations d'une machine ou d'un logiciel ou partie de logiciel), des mouvements et déplacements d'appareils ou de personnes, du temps d'attente, ou des anomalies dans l'exécution d'une commande ou d'une opération, du temps d'exécution d'un traitement, d'une transmission ou d'un calcul, du temps de réaction par un opérateur humain à un signal ou un affichage, etc ;
- il est également possible d'utiliser, outre les grandeurs précitées, leur propriétés statistiques (moyenne, variance, coefficient de corrélation, etc.) ;
- souvent, il est également utile de connaître les valeurs correspondant aux grandeurs précitées pendant les périodes successives qui séparent deux transactions anormales avérées, notamment pendant la période écoulée depuis la dernière transaction anormale détectée.

Ces moyens extracteurs 5 délivrent ainsi des signaux à des moyens suppresseurs 6 destinés à définir, dans le flux des informations en sortie des moyens extracteurs, celles - et seulement celles - que l'on considère comme "suspectes", et qu'il s'agira ensuite de filtrer et d'analyser.

A cet effet, les moyens suppresseurs 6 reçoivent en entrée, outre les signaux bruts délivrés par les moyens

EP 0 396 592 B1

extracteurs 5, des règles prédéterminées (mais éventuellement modifiables) indiquant le critère permettant de considérer qu'un signal en entrée est "suspect" et qu'il devra donc être transmis pour analyse ultérieure aux autres circuits du dispositif.

Le corps de règles contenu dans le circuit 22 peut comprendre des franchissements de seuils, des apparitions d'un phénomène donné, l'utilisation non prévue de commandes à la disposition de l'utilisateur, le déroulement anormal d'un processus, etc.

On obtient ainsi, en sortie de ces moyens suppresseurs 6, des signaux $S_i$, en nombre beaucoup plus réduit que les signaux bruts qui avaient été appliqués en entrée car l'on a éliminé, grâce à ces moyens, toutes les informations qui, par leur nature, correspondent à des signaux que l'on ne cherche pas à classer (qui ne peuvent être fraudés, par exemple).

Ces moyens suppresseurs 6 alimentent également en sortie un fichier d'archives 10 qui conserve en mémoire les signaux correspondants aux événements considérés comme "suspects" - et ces seuls signaux -, à la différence des systèmes classiques qui ne mémorisaient que les signaux bruts, donc tous les signaux, d'ou une limitation rapide du fait du nombre considérable de ceux-ci.

On désignera par la suite $S_i(n)$ les signaux délivrés par les moyens suppresseurs, n désignant la variable utilisée, qui peut être notamment :
- le temps (surtout utilisé à l'intérieur d'une opération ou transaction informatique donnée),
- le numéro d'étape à l'intérieur de la transaction,
- le numéro chronologique de l'opération ou de la transaction,
- le numéro chronologique de l'événement,
- le numéro chronologique des opérations ou traitement qui n'ont pas été menés jusqu'à terme,
- ou encore une grandeur liée à une ou plusieurs des grandeurs précédentes.

A la variable n, on associera une distribution en fréquence f, pouvant être également décrite en termes de pulsation $\omega$.

Ces signaux $S_i(n)$ sont délivrés à des moyens de filtrage ayant pour fonction d'"améliorer le contraste" des signaux $S_i$, c'est à dire d'éliminer, en fonction des caractéristiques statistiques des signaux $S_i(n)$, les variations non significatives de la transaction à analyser ; néanmoins - et de façon caractéristique de la présente invention - cette élimination se fait sans aucune perte sur la qualité du résultat final : en d'autres termes, bien que l'on élimine un certain nombre de signaux, la décision qui sera prise en fin de chaîne restera optimale, sans aucune augmentation de l'incertitude correspondante.

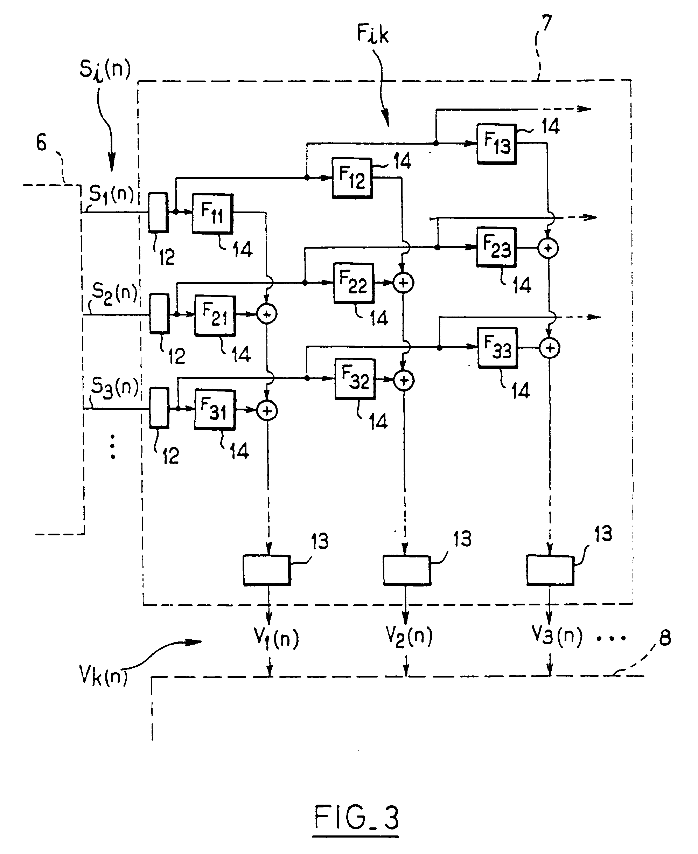

Ces moyens de filtrage 7, qui seront décrits plus en détail ci-dessous en référence à la figure 3, délivrent en sortie des signaux $V_k(n)$ à partir des signaux $S_i(n)$ délivrés par les moyens suppresseurs et, éventuellement, de signaux $S_i$ antérieurs mémorisés dans le fichier d'archives 10 ; en outre, les paramètres du filtrage de ces moyens de filtrage 7 peuvent être modifiés, éventuellement en temps réel, par des moyens de commande 11 permettant d'obtenir un réglage toujours optimal des filtres, notamment en fonction des informations archivées dans le fichier 10 : le système est ainsi rendu auto-adaptatif.

Les signaux $V_k(n)$ sont ensuite appliqués à des moyens de classement 8 qui vont opérer l'analyse proprement dite en fournissant en sortie des signaux $P_u$ représentant la probabilité de l'appartenance de l'événement que l'on étudie à chacune de plusieurs classes $A_u$ d'événements, chaque classe correspondant à un "scénario" u prédéterminé que l'on souhaite détecter.

En d'autres termes, $P_u$ indique, en termes de probabilité, le caractère plus ou moins suspect d'un comportement de l'utilisateur, ce caractère plus ou moins suspect étant typiquement révélateur d'une fraude, d'un abus ou d'une malveillance que l'on souhaite repérer afin de faire prendre au système d'information les décisions qui s'imposent.

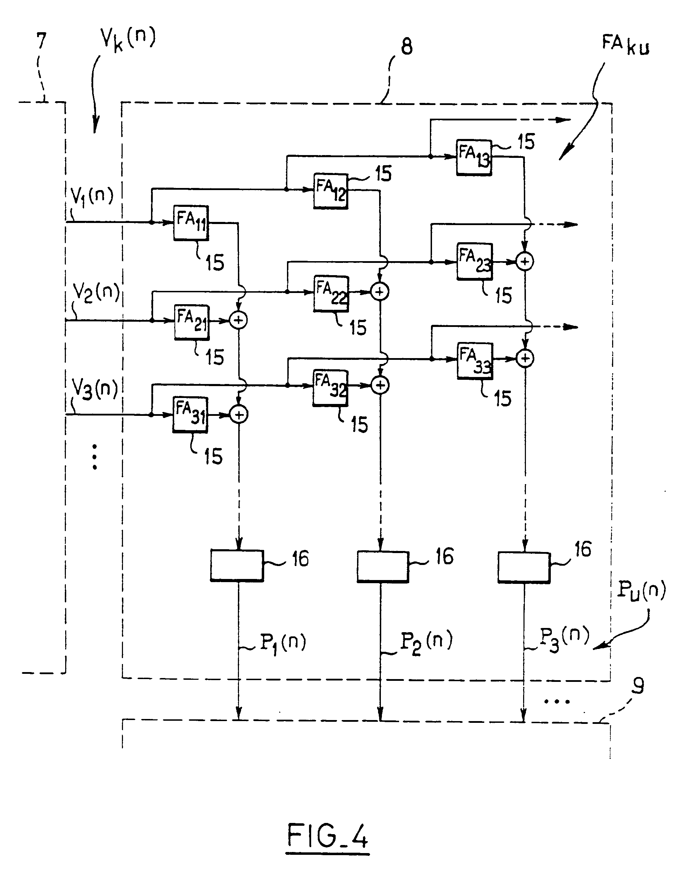

Ces moyens de classement 8, qui seront également décrits plus en détail par la suite en référence à la figure 4, sont de préférence, comme les moyens de filtrage 7, relies à un organe de commande 20 permettant d'effectuer un réglage optimal de filtres utilisés, notamment en fonction des informations archivées dans le fichier 10, et rendant le système auto-adaptatif.

Les signaux $P_u$ peuvent être utilisés tels quels pour la prise de décision, et donc appliqués directement aux moyens de décision 3, ou bien ils peuvent être préalablement traités par des moyens de mise en forme 9, délivrant des signaux traités $P'_u$ aux moyens de décision 3.

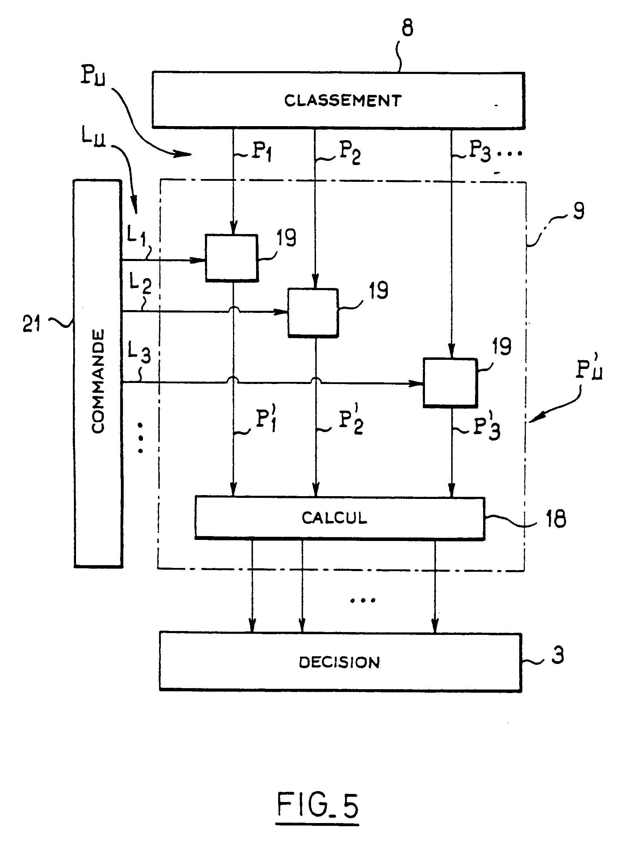

Ces moyens de mise en forme 9, qui seront également décrits plus détail par la suite en référence à la figure 5, peuvent par exemple transformer la variable continue $P_u$ en une variable binaire "tout ou rien" au moyen de circuits à seuil.

De même que les moyens de filtrage 7 et les moyens de classement 8, les moyens de mise en forme 9 sont avantageusement commandés par des moyens 21 assurant une adaptation permanente des fonctions, éventuellement en temps réel, notamment en fonction des informations archivées dans le fichier 10.

5

*Moyens de filtrage*

Les moyens de filtrage 7 ont été représentés plus en détail figure 3.

Ces moyens de filtrage reçoivent en entrée les signaux $S_i(n)$ délivrés par les moyens suppresseurs 6 et délivrent en sortie les signaux $V_k(n)$ aux moyens de classement 8 ; les signaux $V_k(n)$ sont en nombre inférieur ou égal aux signaux $S_i(n)$.

Si le spectre $S*(\omega)$ (dans le domaine des fréquences) du signal $S_i(n)$ (dans le domaine temporel) n'est pas suffisamment plat, il peut être utile de corriger ce spectre, pour chacune des voies $S_i(n)$, par un filtre de voie correcteur 12. Il en est de même pour les sorties $V_k(n)$ (filtres de voie 13).

Entre les entrées $S_i(n)$, éventuellement corrigées par les filtres 12, et les sorties $V_k(n)$, éventuellement corrigées de la même façon par les filtres 13, on dispose, selon l'invention, une matrice de filtrage formée d'un réseau de filtres $F_{ik}$, cette matrice étant de préférence une matrice de filtrage de type linéaire, telle qu'une matrice de filtrage de Wiener, de filtrage de Wiener discret ou de filtrage de Kalman.

(Pour la simplicité de l'exposé qui va suivre, on considèrera par la suite des variables continues. S'il s'agit, comme c'est souvent le cas en pratique, de signaux discrets ou échantillonnés, on utilisera les relations équivalentes obtenues par exemple à partir de la transformation en Z bilatérale.)

Le type de filtrage mentionné plus haut a notamment pour propriété de tenir compte au mieux des caractéristiques statistiques des signaux $S_i(n)$ (notamment l'auto-corrélation sur chaque voie $S_i$ et les intercorrélations entre voies $S_i$ et $S_j$), afin d'éliminer au mieux toutes les variations des signaux $S_i(n)$ qui ne sont pas significatives d'une anomalie recherchée.

On va décrire, à titre d'exemple, les moyens de filtrage réalisés sous forme d'une matrice de filtrage de Wiener.

Il existe en principe un filtre $F_{ik}$, référencé 14, pour chaque couple $(S_i,V_k)$. Chaque ligne de filtre reçoit un même signal $S_i(n)$ tandis que, en sortie des filtres, les signaux délivrés sont additionnés sur chaque colonne pour former une voie $V_k$ respective.

A titre d'exemple particulier de réalisation, on peut notamment déterminer chaque filtre $F_{ik}$ par la relation suivante :

$$F_{ik}(\omega) = M_{ik} / \Delta(\omega) \quad (1)$$

où $M_{ik}$ et $\Delta$ sont déterminés comme on va l'indiquer.

Si l'on considère les signaux $S_i(n)$ pendant une ou plusieurs périodes où l'on est presque sûr (par exemple, par un examen *a posteriori*, ou en effectuant une simulation), qu'il n'y a pas eu d'événement qui puissent être considéré comme anormal ou suspect, ces signaux $S_i(n)$ représentent donc, de façon valable, des échantillons significatifs représentatifs de la catégorie des événements non suspects, correspondant typiquement à un usage normal du système d'information.

Si l'on désigne $C_{ik}(\tau)$ le coefficient de corrélation entre les suites $S_i(n)$ et $S_k(n)$, $\tau$ étant le "retard", c'est à dire la différence $(n_i-n_k)$, les coefficients de corrélation $C_{ik}(\tau)$ peuvent être mis sous la forme d'une matrice $M(\tau)$, d'ordre r.

Le déterminant $\Delta(\tau)$ de cette matrice a, dans l'espace des fréquences, une transformée $\Delta(\omega)$ qui forme le numérateur de l'expression (1) ci-dessus.

Si maintenant on supprime dans la matrice $M(\tau)$ les éléments contenus dans la ligne i et dans la colonne k, on obtient une nouvelle matrice $M_{ik}$ (en principe d'ordre r-1) qui est une fonction de $\tau$, et dont la transformée dans l'espace des fréquences est $M_{ik}(\omega)$, qui constitue le dénominateur de la relation (1) ci-dessus.

On notera que l'on peut supprimer dans cette matrice de filtrage les filtres dont les gains relatifs sont faibles ou négligeables, ce qui contribue à en simplifier la réalisation.

Si, par ailleurs, tous les filtres $F_i$ correspondant à un signal $S_i$ sont nuls ou négligeables, on peut en déduire que le signal $S_i$ n'est pas discriminant pour déterminer si l'événement doit être considéré comme normal ou suspect et pour le classer.

D'autre part, un filtre $F_{ik}$ peut entraîner un retard du signal de sortie $V_k$ par rapport au signal d'entrée $S_i$ et il pourra arriver que ce retard soit important, et même prohibitif compte tenu de l'urgence qu'il peut y avoir à prendre une décision dans une situation donnée. Pour pallier cet inconvénient, on pourra soit supprimer le filtre $F_{ik}$, soit limiter son retard, c'est à dire choisir un filtre sous-optimal.

Jusqu'à présent, on a supposé que les filtres $F_{ik}(\omega)$ étaient indépendants de n (par exemple, du temps) ; dans ce cas, les calculs des filtres sont faits une fois pour toutes.

Il peut cependant arriver que le calcul des filtres, par exemple à partir de la relation (1) ci-dessus, donne des résultats variables en fonction de n, c'est à dire en fonction de l'historique des événements antérieurs mémorisés dans le fichier 10 ; dans ce cas, on calculera les filtres optimaux non plus une fois pour toutes mais périodiquement, éventuellement à chaque fois et en temps réel, c'est à dire pour chaque nouveau vecteur de signaux $S_i(n)$, le réglage des filtres étant modifié en conséquence à chaque séquence d'analyse.

L'organe de commande référencé 11 sur la figure 2 permet d'assurer ce réglage variable et continu (ou discontinu) des filtres, par exemple en recalculant l'expression (1) et en modifiant en conséquence le réglage des filtres $F_{ik}$ ou d'une partie de ceux-ci (en effet, il se peut que seuls certains des filtres $F_{ik}$ soient affectés par l'historique des événements).

*Moyens de classement*

On a représenté plus en détail sur la figure 4 les moyens de classement 8, qui reçoivent en entrée les signaux $V_k(n)$ délivrés par les moyens de filtrage 7 de la manière que l'on vient d'exposer et qui délivrent en sortie, aux moyens de mise en forme 9, des signaux $P_u(n)$ dont l'amplitude est représentative de la probabilité attachée à chacune des sous-classes particulières d'événements parmi les événements avérés anormaux.

Ces différentes sous-classes correspondent, comme on l'a expliqué plus haut, à différents "scénarios" que l'on sait isoler, par exemple par analyse statistique, ou simuler.

A chaque scénario $A_u$ on fera correspondre un ensemble de décisions $D_u$ permettant de tirer au mieux parti de la situation, ou d'en limiter au maximum les risques.

Le nombre de colonnes u est quelconque (il dépend en fait du type de transaction à analyser, de la finesse d'analyse souhaitée et de la variété des signaux discriminants disponibles); il existe au moins une colonne u.

Les moyens de classement 8 sont constitués d'une matrice de filtres adaptés $FA_{ku}$, référencés 15, alimentés de la même manière que dans le cas des moyens de filtrage décrits ci-dessus, c'est à dire que tous les filtres $FA_{ku}$ d'une même ligne reçoivent le même signal $V_k(n)$, et que les sorties de tous les filtres $FA_{ku}$ d'une même colonne sont sommées pour fouir le signal $P_u$ respectif après détection par un circuit 16 délivrant une valeur arithmétique à partir de la valeur algébrique du signal somme en sortie des filtres, le circuit 16 étant par exemple un circuit de détection quadratique.

On notera que les circuits 16 sont optionnels, et peuvent être limités à une simple mise en forme des signaux (sans détection quadratique).

Une détection quadratique pourra être prévue dans l'un des blocs tels que 3, 18 ou 19 décrits plus bas.

Le calcul et le réglage des filtres $FA_{ku}$ s'obtient en simulant ou en reproduisant (par exemple à partir de l'historique conservé dans le fichier 10) chacun des scénarios u.

On obtient ainsi en sortie des moyens de filtrage 7 un signal respectif $V_{ku}(n)$, conséquence des scénarios d'événements u dans la voie $V_k$ ; de préférence, on répète plusieurs fois ce même scénario u, et l'on conserve pour $V_{ku}$ le signal moyen des différents signaux obtenus à chaque répétition.

A chaque signal $V_{ku}(n)$ on associe un filtre adapté $FA_{ku}$, déterminé par la relation générale

$$FA(\omega) = K.e^{-j\omega t_o} V*(\omega) \quad (2)$$

K étant une constante, $t_o$ étant également une constante (retard), $V(\omega)$ étant la transformée de Fourier de $V(n)$ et $V*(\omega)$ étant la conjuguée de $V(\omega)$.

Comme dans le cas des moyens de filtrage, il est possible, pour les moyens de classement :

- de supprimer les filtres FA dont les gains relatifs sont négligeables,
- si tous les filtres d'une même ligne sont nuls ou négligeables, on peut en déduire que le signal $V_k(n)$ n'est pas significatif pour discriminer les différents scénarios $A_u$ ; on peut alors supprimer les filtres correspondants.
- si tous les filtres d'une colonne sont nuls ou négligeables, on peut en déduire que les signaux $S_i$ ne sont pas discriminants pour la sous-classe d'événements u.
- si un filtre $FA_{ku}$ entraîne un retard important ou prohibitif du signal de sortie $P_u$ par rapport au signal d'entrée $V_k$ et que l'on souhaite pouvoir prendre rapidement une décision dans une situation donnée, on pourra soit supprimer ce filtre soit, de préférence, limiter son retard, c'est à dire choisir un filtre sous-optimal.
- les filtres $FA_{ku}$ peuvent être des filtres variables dans le temps, leur réglage étant adaptés en permanence par les moyens de commande 20 pour que leurs caractéristiques correspondent toujours à l'optimum calculé.

On a jusqu'à présent supposé que les différents scénarios $A_u$ étaient connus à l'avance, et qu'il existait donc autant de signaux $P_u$ que de sous-classes $A_u$ différentes, c'est à dire de scénarios différents.

On peut vérifier *a posteriori* que la partition en sous-classes $A_u$ est significative, en vérifiant que les deux colonnes de filtres adaptés $FA_{ku}$ correspondant à deux scénarios différents sont significativement différentes ; dans le cas contraire, il est possible de supprimer l'une des deux colonnes de filtres, puisque ces deux colonnes sont plus ou moins redondantes.

Si l'on ne connait pas à l'avance les différents scénarios $A_u$, ou si l'on connaît mal ceux-ci, on peut utiliser de façon empirique (tout au moins en l'absence d'un fichier historique des événements suffisamment riche pour déterminer avec précision la partition entre les différents scénarios), au moins deux batteries de filtres, dont l'une est à large bande, c'est à dire à réaction rapide, et l'autre à bande étroite, c'est à dire à réaction lente.

*Moyens de mise en forme*

On va maintenant décrire plus en détail les moyens de mise en forme 9, en référence à la figure 5.

Dans certains cas, la simple présentation des informations $P_u$ peut suffire à la prise de décision, de sorte que les moyens de mise en forme 9 sont simplement réduits à un affichage de ces différents signaux $P_u$.

Néanmoins, dans la plupart des cas ces signaux ne sont pas directement utilisables, en particulier lorsque les décisions à prendre dans une situation donnée ne dépendent pas directement des grandeurs $P_u$, mais de combinaisons logiques, algébriques ou heuristiques des grandeurs $P_u$ et de leurs variations en fonction de n (typiquement, en fonction du temps).

A chaque catégorie *u* d'événements et donc à chaque signal $P_u$ on pourra souvent affecter des coefficients pondérateurs.

Par exemple, pour un système de cartes accréditives on posera:

Classe 1 (signal $P_1$)         : cartes volées,
Classe 2 (signal $P_2$)         : cartes falsifiées,
Classe 3 (signal $P_3$)         : utilisations abusives (défaut de provision), etc.

On sait par expérience combien une carte volée coûte, en moyenne, à l'émetteur, au porteur, etc. De même pour les cartes falsifiées, etc.

L'organe de calcul 18, en faisant une addition pondérée des signaux $P_1$, $P_2$, $P_3$, ... donnera directement les risques financiers (espérance mathématique du dommage potentiel) pour chaque transaction analysée et pour chaque partenaire.

Les événements pourront être classes par risque décroissant selon plusieurs critères (par exemple par émetteur, par porteur, etc.). On retiendra les transactions correspondant aux risques les plus élevés.

Le nombre d'éléments à retenir pourra être fixe de plusieurs manières ; un critère pourra être de maintenir le taux de fausse-alarme (ou le taux de non-détection) au-dessous d'une valeur maximale, ou bien de fixer une règle combinant les deux taux. Dans d'autres cas, on pourra chercher à plafonner le nombre de cas sélectionnés en vue d'analyses plus approfondies, et s'il y a lieu pour traitements manuels complémentaires (enquête téléphonique par exemple).

Les différents calculs sont effectués par un organe de calcul 18 délivrant en sortie des signaux directement utilisables par les moyens de décision 3.

Par ailleurs, il peut être très souvent utile de transformer les signaux continus $P_u$ en signaux binaires $P'_u$, c'est à dire d'obtenir une information non plus en termes de probabilité, mais une information "tout ou rien" sur l'existence ou non d'un scénario $A_u$.

Dans ce dernier cas, la transformation est effectuée par des comparateurs 19 recevant chacun en entrée un signal $P_u$ et le comparant à un seuil $L_u$ respectif de manière à fournir le résultat binaire $P'_u$ (on notera que l'organe 19 est optionnel).

Les seuils $L_u$ peuvent être fixes et réglés une fois pour toutes.

Cependant, lorsque, à partir des informations du fichier historique 10, on s'aperçoit de variations notables en fonction de n (typiquement, en fonction du temps), on peut être amené à faire varier les seuils $L_u$ en fonction des informations de ce fichier ; ce réglage continu des seuils est réalise par un circuit 21 (figure 2), similaire dans son fonctionnement aux circuits de commande 11 et 20 agissant respectivement sur les moyens de filtrage 7 et les moyens de classement 8.

Comme pour ces derniers, le circuit 21 rend le dispositif d'analyse de l'invention auto-adaptatif en fonction de l'évolution dans le temps des données.

Cet ajustement permanent des seuils $L_u$ peut aussi permettre de régler les moyens de mise en forme de manière à maintenir à une valeur de référence des critères fixés à l'avance, par exemple de manière à maintenir constant le taux moyen d'événements anormaux, ou le taux moyen de décisions négatives prises par les moyens de décision 3.

*Variantes de mise en oeuvre*

La configuration décrite ci-dessus peut être perfectionnée de diverses manières en fonction de la nature et de la complexité des transactions à analyser.

On peut par exemple utiliser plusieurs dispositifs d'analyse 4, 4',... (figure 1) en parallèle, correspondant chacun à des critères d'anormalité significativement différents, ou bien pour des raisons de séparation des fonctions, facilite de réalisation, fiabilité, etc., bien que, théoriquement, un système utilisant plusieurs dispositifs d'analyse en parallèle soit équivalent à un système d'analyse unique avec des matrices de filtrage de plus grande dimension.

Par ailleurs, dans le cas de plusieurs dispositifs en parallèle, certains organes peuvent être communs, c'est à dire que l'on ne met en parallèle que (par exemple) les moyens de filtrage , les moyens suppresseurs et de classement étant communs, etc.

On peut également mettre en cascade plusieurs dispositifs d'analyse selon l'invention, dans les cas complexes où les décisions doivent être prises avec des signaux $P_u$ ou $P'_u$ fortement corrélés entre eux : il sera alors utile d'utiliser un dispositif d'analyse secondaire utilisant comme signaux d'entrée les signaux de sortie $P_u$ du dispositif d'analyse principal ; le réglage du dispositif d'analyse secondaire s'effectue de la même manière que celui du dispositif d'analyse principal.

En ce qui concerne les techniques de filtrage et de classement utilisées, on peut utiliser, comme on l'a décrit plus haut, des filtres numériques $F_{ik}$ et $FA_{ku}$, à caractéristiques fixes ou variables.

On peut également utiliser, en lieu et place de ces filtres numériques, des corrélateurs ou des convoluteurs, selon des techniques connues.

Par ailleurs, les filtres successifs 12, 14, 13, 15, 19, 18, etc. que l'on a décrit sont pour l'essentiel des éléments additifs et linéaires, de sorte que l'on pourra adopter toutes dispositions équivalentes, par exemple en regroupant des filtres placés en série et en les remplaçant par un filtre unique.

Lorsque les informations traitées s'étalent sur des jours, voire des mois ou plus, il est avantageux d'utiliser des filtres à caractéristiques exponentielles de façon à limiter le nombre d'informations à garder en mémoire.

Certains filtres peuvent être réduits à un simple coefficient pondérateur (ou à un nombre limité de coefficients).

En outre, il est souvent avantageux de multiplier le nombre de filtres en vue de simplifier leur mode de réalisation. Dans ce but, on utilisera des signaux d'entrée binaires.

Par exemple, une seule information telle que le montant $m$ pourra être remplacée par l'information "appartenance à un classe de montants" :

$$
\begin{aligned}
a_1 &= 1 \quad \text{si} \qquad\ \ 0 \leq m < \ \ 600 \text{ francs} \quad (a_1 = 0 \text{ sinon}) \\
a_2 &= 1 \quad \text{si} \quad\ 600 \leq m < 1200 \text{ francs} \quad (a_2 = 0 \text{ sinon}) \\
a_3 &= 1 \quad \text{si} \ 1200 \leq m \qquad\qquad\qquad\ (a_3 = 0 \text{ sinon})
\end{aligned}
$$

Dans les systèmes de filtres 7, une seule ligne de filtres f(m) est remplacée par trois lignes de filtres ($a_1$, $a_2$, $a_3$) mais, les signaux $a_1$, $a_2$, $a_3$ étant binaires, les coefficients de corrélation et produits de convolution sont beaucoup plus simples.

La réalisation des filtres et la numérisation des signaux intermédiaires en seront grandement facilitées.

*Application à la propagation d'alarme*

De façon générale, l'ensemble d'analyse selon l'invention peut être :
- soit complet et autonome,
- soit intégré dans un système expert dont il constitue un élément principal de décision,
- soit distribué sur plusieurs niveaux.

Concernant ce dernier point, il y a lieu de remarquer que le système de l'invention est particulièrement avantageux dans un système distribué et hiérarchisé de machines tel qu'un réseau informatique ou un réseau d'équipements tels que distributeurs de billets, terminaux point de vente, dispositifs utilisant des cartes à circuit intégré, etc.

Par exemple, dans le cas des terminaux point de vente, les équipements installés chez les commerçants dépendent d'un centre local d'autorisation, lui-même relié à un centre national, qui à son tour est relié à un centre international.

A chaque niveau hiérarchique sont prévues des limites d'autorisation prédéfinies, avec une délégation au niveau supérieur en cas de dépassement de cette limite. Par exemple, au niveau du terminal point de vente, l'autorisation peut être délivrée sans en référer au centre local si le montant de la transaction ne dépasse pas un plafond donné, et pour une transaction unique par jour chez un même commerçant ; si ces conditions ne sont pas remplies, le commerçant devra en référer au centre local, qui pourra accorder l'autorisation lui-même, ou bien devra en référer au centre national, en fonction d'autres règles de décision, etc.

On conçoit que les règles aujourd'hui utilisées sont assez frustres, en particulier au niveau hiérarchique le plus bas.

La présente invention permet précisément d'améliorer cet état de fait en prenant une décision beaucoup plus "subtile" en prévoyant une analyse *in situ* de la transaction, par exemple par un dispositif ou logiciel simple supplémentaire intégré au terminal point de vente.

Ceci permet d'une part de diminuer le nombre de recours au centre local, toujours lourds à gérer (établissement d'une communication téléphonique, télétransmission d'un certain nombre d'informations, attente, etc.), tout en diminuant le risque d'utilisations frauduleuses.

En outre, et de façon particulièrement avantageuse, le système de la présente invention permet, lorsqu'une transaction suspecte est avérée (et *a fortiori* s'il s'agit effectivement d'une tentative frauduleuse), de propager l'alarme à l'intérieur du système distribué, selon une fonction du temps (dépendant de l'éloignement des équipements voisins) et de façon progressive (l'alarme étant d'abord propagée aux équipements les plus proches) et évolutive (la détection, sur plusieurs équipements, de transactions suspectes rapprochées dans le temps et dans l'espace permet d'augmenter le niveau de l'alarme).

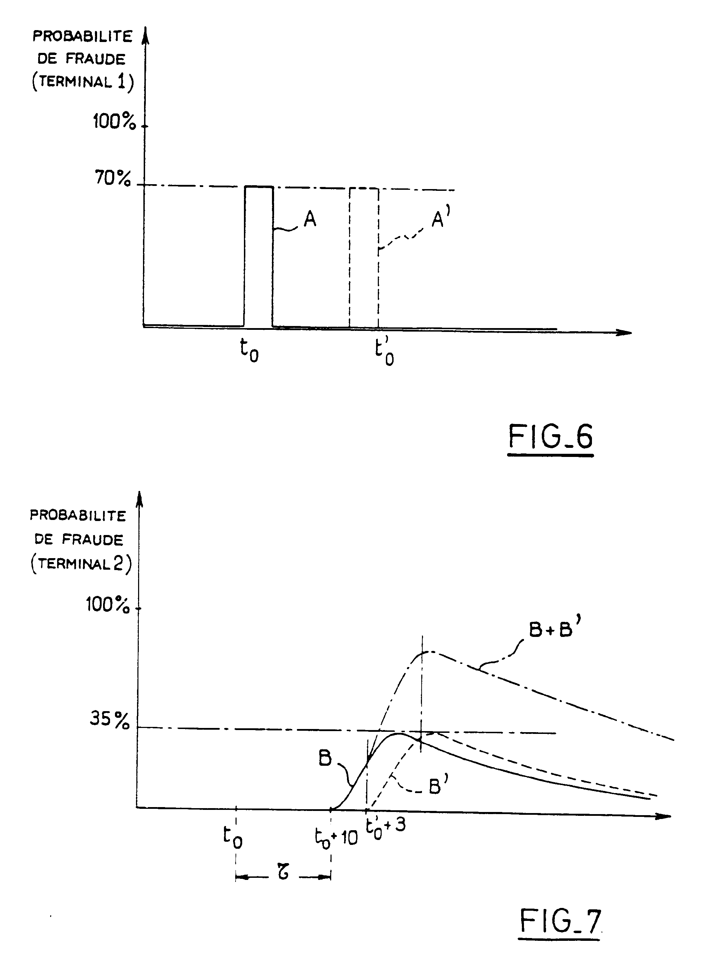

En d'autres termes, si le système d'analyse de l'invention incorporé à un équipement donné du système distribué détecte une transaction suspecte à un instant $t_0$, la probabilité correspondante de fraude selon un scénario $A_u$ déterminé va passer, pour cet équipement, à un niveau donné (par exemple, 70 %) à cet instant $t_0$, comme illustré en A sur la figure 6.

On va utiliser ce système pour mettre en alerte les équipements géographiquement voisins en transmettant à ceux-ci un signal d'alerte - qui constituera l'un des signaux d'entrée de leur dispositif d'analyse propre -, cette transmission pouvant être effectuée soit via le niveau hiérarchique supérieur (transmission de l'information au centre local qui la répercute ensuite progressivement vers les équipements voisins, en commençant par les plus proches, cette solution étant généralement préférable dans le cas d'un réseau d'équipements très dense autour de l'équipement où a été détectée la transaction suspecte), soit directement de point à point, ce qui évite de surcharger le système informatique du centre local.

La probabilité de fraude pour un équipement ("terminal 1") situé par exemple à une distance correspondant à un temps de parcours minimal de 10 minutes par rapport à l'équipement ("terminal 2") où a été détectée la transaction suspecte est indiquée figure 7.

Avec une constante de temps $\tau$ = 10 minutes par rapport au signal A, c'est à dire à partir de l'instant $t_0$+10, la probabilité (courbe B) va augmenter progressivement jusqu'à un maximum, puis diminuer lentement, le risque de fraude s'estompant peu à peu avec le temps.

Les filtres de ce terminal seront par exemple choisis de sorte que la probabilité maximale soit inférieure à la probabilité déterminée pour le terminal 1, par exemple moitié moindre, ce qui donne une probabilité maximale de 35 %.

Si, en revanche, une seconde transaction suspecte A'(figure 6) est détectée (au terminal 1 ou à un autre équipement voisin) à un instant $t'_0$ peu de temps après la première transaction suspecte A, on obtiendra au terminal 2 une seconde réponse B'correspondante, identique à la réponse B, mais décalée dans le temps. La composition des deux réponses B et B' donne la réponse B+B' qui, comme on peut le constater, passe par un maximum correspondant à une probabilité de fraude très supérieure à celle correspondant à une seule transaction suspecte détectée (réponse B ou réponse B').

Une telle application de la présente invention à la propagation d'alarme permet d'accroître considérablement la prévention des fraudes et permet en outre un suivi géographique en temps réel des transactions suspectes, ce qui rend le système particulièrement dissuasif.

Ce système de propagation d'alarme est en outre relativement aisé et peu coûteux à mettre en oeuvre, dans la mesure où il ne requiert aucune infrastructure supplémentaire par rapport à ce qui existe actuellement.

*Exemple de mise en oeuvre de l'invention appliquée à un système de délivrance d'autorisations pour cartes accréditives*

Dans cette application, les signaux significatifs $S_i$ pourront être les suivants :
- nature du service demandé (distribution d'argent, paiement, transfert de fonds, etc.),
- moyen utilisé à cet effet (distributeur de billets, automate en libre-service, appareil fonctionnant en présence ou non d'un commerçant, etc.),
- lieu d'origine de la demande d'autorisation (magasin, automate bancaire sur la voie publique, terminal à domicile, etc.),
- montant demandé (ou, de préférence, son ordre de grandeur, défini par le logarithme du montant, ce qui permet de réduire le nombre de bits d'informations sans compromis sur le résultat final),
- moyen d'autentification du support et des informations (par le commerçant, par un moyen automatisé, par une lecture de piste magnétique, etc.),
- moyen d'identification du porteur (signature, code confidentiel, caractéristique biométrique, etc.),
- délai de réponse demandé pour l'obtention de l'autorisation,
- lieu géographique du demandeur ou toute information équivalente,

- nature du commerce,
- date (jour de la semaine, quantième, etc.) et heure de la demande,
- lieu habituel d'achats et lieu du dernier achat, ce qui permet de mesurer la "distance" entre ces données et le lieu d'où provient la demande d'autorisation,
- transactions déjà effectuées dans le passé pour un porteur donné.

Ces grandeurs précédentes ne sont pas aléatoires ni indépendantes.

Si l'on utilise pour le filtrage un système mettant en oeuvre la relation (1) indiquée plus haut, le résultat sera, par exemple pour un filtre $F_{ik}$ correspondant à la fréquence des demandes, un filtre ayant une caractéristique de filtre intégrateur avec une largeur de bande de l'ordre de huit jours.

L'ensemble des filtres $F_{ik}$ étant ainsi défini et ceux-ci réglés selon leurs caractéristiques optimales, on peut procéder au règlage des filtres adaptés $FA_{ku}$.

On considèrera à cet effet des scénarios correspondant à divers risques ; par exemple :
- dans le cas de l'utilisation abusive d'une carte volée : le nombre d'utilisations et leurs montants, ainsi que la période pendant laquelle l'utilisation a lieu, etc. sont des données connues qui peuvent être utilisées pour régler une colonne de filtres adaptés $FA_{ku}$.

Le réglage du seuil du circuit 16 correspondant à cette colonne sera effectué par exemple de telle façon que le nombre de dépassements de seuil en l'absence d'utilisation abusive reste à un niveau acceptable (par exemple, inférieur à 1 ‰ des demandes d'autorisation) ;
- une deuxième ligne de filtres adaptés $FA_{ku}$ pourra être obtenue en considérant les tentatives de recherche du code confidentiel associe à une carte donnée, ou bien l'apparition de supports physiquement différents portant des informations identiques (cas des cartes frauduleusement dupliquées), etc.

De façon générale, pour simplifier et accélérer les calculs :
- on ne conservera pour chaque information qu'un minimum de bits d'information (quelques bits, éventuellement un seul bit),
- on utilisera la technique d'addition des réponses percussionnelles des filtres, c'est à dire qu'on mettra à jour la réponse des filtres sans recalculer complètement cette réponse à chaque fois, mais simplement en cumulant les réponses percussionnelles correspondant à chaque transaction informatique nouvelle,
- on ne conservera en mémoire que les caractéristiques permettant de mettre à jour la réponse des filtres (date de la dernière mise à jour, paramètre décrivant la réponse en gain et en phase), et à chaque nouvelle demande d'autorisation, ces paramètres seront mis à jour.

Enfin, les réglages des filtres pourront être différents selon les périodes: heures ouvrables ou non, jour de la semaine, week-end prolongé, périodes de vacances ou de fin d'années, etc).

## Revendications

1. Un dispositif (4) d'analyse d'une transaction informatique ou partie de transaction, dans lequel le dispositif reçoit en entrée des signaux comprenant les informations délivrées par un utilisateur demandant l'exécution de la transaction ainsi que des informations de contexte représentatives des conditions de déroulement de la transaction, et délivre en sortie des signaux de commande à des moyens de décision (3) déterminant s'il y a lieu ou non de délivrer une autorisation à l'utilisateur lui permettant de poursuivre la transaction ou de modifier le déroulement de cette transaction ou de transactions ultérieures,
   caractérisé par :
   - des moyens extracteurs (5), pour ne conserver, parmi les informations reçues en entrée, que celles utiles à l'analyse de la transaction,
   - des moyens suppresseurs (6), pour éliminer les signaux correspondant à une transaction considérée comme conforme à un ensemble de règles prédéterminées, de manière à ne pas poursuivre l'analyse pour les transactions de ce type,
   - des moyens de filtrage (7), pour éliminer, en fonction des caractéristiques statistiques des signaux délivrés par les moyens suppresseurs, les variations non significatives de la transaction à analyser,
   - des moyens de classement (8), pour répartir les signaux de la transaction à analyser en sortie des moyens de filtrage (7) dans une ou plusieurs classes d'au moins un ensemble de classes, chaque ensemble correspondant à un critère prédéterminé de classification, ces moyens de classement délivrant en sortie les signaux de commande des moyens de décision.

2. Le dispositif de la revendication 1, comprenant des moyens d'archivage (10) assurant la mémorisation des signaux correspondant à des transactions antérieures.

3. Le dispositif de la revendication 2, dans lequel les moyens de filtrage (7) sont des moyens à effet variable, commandés par des moyens de calcul et de réglage (11) fonctionnant en réponse au contenu des moyens d'archivage (10).

4. Le dispositif de l'une des revendications 2 ou 3, dans lequel les moyens de classement (8) sont des moyens à effet variable, commandés par des moyens de calcul et de réglage (20) fonctionnant en réponse au contenu des moyens d'archivage (10).

5. Le dispositif de l'une des revendications précédentes, dans lequel les informations transmises aux moyens extracteurs comprennent des signaux représentatifs de l'écart entre les conditions effectives de déroulement de la transaction et les conditions considérées comme normales du déroulement de cette transaction.

6. Le dispositif de la revendication 5, dans lequel le signal représentatif dudit écart est un signal de distance quantifiant l'écart plus ou moins grand entre les conditions effectives de déroulement de la transaction et les conditions considérées comme normales du déroulement de cette transaction.

7. Le dispositif de l'une des revendications 1 à 6, comprenant une pluralité de moyens de classement (8) disposés en parallèle, recevant en entrée les mêmes signaux et délivrant chacun en sortie des signaux spécifiques à des moyens combinatoires (9) formant interface avec les moyens de décision.

8. Le dispositif de l'une des revendications 1 à 7, installé au moins partiellement dans un équipement d'un système distribué, caractérisé en ce qu'un équipement du système reçoit des signaux en provenance des dispositifs d'analyse d'équipements voisins, ces signaux, qui comportent au moins un signal d'alarme, constituant des signaux d'entrée du dispositif d'analyse de cet équipement.

9. Le dispositif de la revendication 8, dans lequel le signal transmis à chaque équipement voisin est transmis avec application d'une fonction du temps comportant un retard, cette fonction dépendant de l'éloignement de cet équipement par rapport à l'équipement ayant émis le signal correspondant.

## Patentansprüche

1. Gerät (4) zur Analyse einer Datenverarbeitungstransaktion oder -teiltransaktion, wobei das Gerät Eingangssignale empfängt, die von einem Operator zur Ausführung der Transaktion eingegebene Informationen sowie die Bedingungen für die Abwicklung der Transaktion darstellende Kontextinformationen umfassen, und Ausgangsbefehlssignale an Entscheidungsvorrichtungen (3) weitergibt, die entscheiden, ob dem Operator eine Autorisierung gegeben wird oder nicht, die es ihm ermöglicht, die Transaktion weiterzuverfolgen oder den Ablauf dieser Transaktion oder weiterer Transaktionen zu modifizieren,
gekennzeichnet durch:
- Auslesevorrichtungen (5), um von den empfangenen Eingangsinformationen nur die zur Analyse der Transaktion notwendigen zu erhalten,
- Unterdrückervorrichtungen (6), um die Signale zu eliminieren, die einer als mit einem vorbestimmten Regelsatz übereinstimmend angesehenen Transaktion entsprechen, so daß die Analyse für Transaktionen dieser Art nicht weiterverfolgt wird,
- Filtervorrichtungen (7), um in Abhängigkeit der statistischen Merkmale der von den Unterdrückervorrichtungen gegebenen Signale unbedeutende Variationen der zu analysierenden Transaktion auszuschließen,
- Klassifizierungsvorrichtungen, um die von den Filtervorrichtungen (7) ausgegebenen Signale zur Analyse der Transaktion in eine oder mehrere Klassen oder zumindest in eine Einheit von Klassen einzuordnen, wobei jede Einheit einem vorbestimmten Klassifizierungskriterium entspricht, wobei diese Klassifizierungsvorrichtungen die Befehle der Entscheidungsvorrichtungen als Ausgangssignale weitergeben.

2. Gerät nach Anspruch 1, umfassend Archivierungsvorrichtungen (10), die die Speicherung der früheren Transaktionen entsprechenden Signale sicherstellen.

3. Gerät nach Anspruch 2, wobei die Filtervorrichtungen (7) Vorrichtungen variabler Wirkungsweise sind, die von den auf den Inhalt der Archivierungsvorrichtungen (10) ansprechenden Rechen- und Steuervorrichtungen (11) gesteuert werden.

4. Gerät nach einem der Ansprüche 2 oder 3, wobei die Klassifizierungsvorrichtungen (8) Vorrichtungen variabler Wirkungsweise sind, die von den auf den Inhalt der Archivierungsvorrichtungen (10) ansprechenden Rechen- und Steuervorrichtungen (20) gesteuert werden.

5. Gerät nach einem der vorhergehenden Ansprüche, wobei die an die Auslesevorrichtungen weitergebenen Informationen Signale umfassen, die der Abweichung zwischen den tatsächlichen Abwicklungsbedingungen der Transaktion und den als normal für die Abwicklung der Transaktion angesehenen Bedingungen entsprechen.

6. Gerät nach Anspruch 5, wobei das dieser Abweichung entsprechende Signal ein Abstandssignal ist, das die mehr oder weniger große Abweichung zwischen den tatsächlichen Abwicklungsbedingungen für die Transaktion und den als normal für die Abwicklung dieser Transaktion angesehenen Bedingungen quantifiziert.

7. Gerät nach einem der Ansprüche 1 bis 6, umfassend eine Vielzahl von parallel angeordneten Klassifizierungsvorrichtungen, die eingangsseitig dieselben Signale empfangen und von denen jede ausgangsseitig spezifische Signale weitergibt an Kombinationsvorrichtungen (9), die mit den Entscheidungsvorrichtungen eine Schnittstelle bilden.

8. Gerät nach einem der Ansprüche 1 bis 7, das zumindest teilweise innerhalb einer Einrichtung eines verteilten Systems angeordnet ist, dadurch gekennzeichnet, daß eine Einrichtung des Systems Signale von Analysevorrichtungen benachbarter Einrichtungen empfängt, wobei diese wenigstens ein Alarmsignal umfassenden Signale Eingangssignale der Analysevorrichtungen dieser Einrichtung bilden.

9. Gerät nach Anspruch 8, wobei das jeder Nachbareinrichtung übermittelte Signal unter Anwendung einer eine Verzögerung umfassenden Zeitfunktion weitergegeben wird, wobei diese Funktion abhängt von der Entfernung dieser Einrichtung zu der Einrichtung, die das entsprechende Signal abgegeben hat.

## Claims

1. A device (4) for analysing a data processing transaction or part of a transaction, wherein at the input the device receives signals comprising the data supplied by a user requesting the execution of the transaction, and contextual data representative of the conditions of development of the transaction, and at the output supplies control signals to decision means (3) determining whether or not it is appropriate to authorise the user to continue the transaction or to modify the development of this transaction or subsequent transactions,
characterised by:
   - extraction means (5) for retaining, from amongst the data received at the input, only that data which is useful for analysing the transaction,
   - suppression means (6) for eliminating the signals corresponding to a transaction considered as compliant with a set of predetermined rules so as not to continue the analysis for transactions of this type,
   - filtering means (7) for eliminating, as a function of the statistical characteristics of the signals supplied by the suppression means, the insignificant variations of the transaction to be analysed,
   - classification means (8) for distributing the signals of the transaction to be analysed, on being output by the filtering means (7), into one or more classes of at least one set of classes, each set corresponding to a predetermined classification criterion, these classification means supplying at the output the control signals of the decision means.

2. The device of claim 1, comprising archiving means (10) ensuring the storage of the signals corresponding to previous transactions.

3. The device of claim 2, wherein the filtering means (7) are means with variable effect, controlled by calculating and regulating means (11) functioning in response to the content of the archiving means (10).

4. The device of either one of claims 2 and 3, wherein the classification means (8) are means with variable effect, controlled by calculating and regulating means (20) functioning in response to the content of the archiving means (10).

5. The device of any one of the preceding claims, wherein the data transmitted to the extraction means comprises signals representative of the divergence between the actual conditions of development of the transaction and the conditions considered as normal for the development of this transaction.

6. The device of claim 5, wherein the signal representative of the said divergence is a distance signal quantifying the extent of the divergence between the actual conditions of development of the transaction and the conditions considered as normal for the development of this transaction.

7. The device of any one of claims 1 to 6, comprising a plurality of classification means (8) arranged in parallel, receiving the same signals at the input and each supplying signals at the output specific to the combinatory means (9) forming an interface with the decision means.

8. The device of any one of claims 1 to 7, at least partly installed in a unit of a distributed system, characterised in that a unit of the system receives signals issuing from the analysing devices of adjacent units, these signals, which comprise at least one alarm signal, forming input signals of the analysing device of this unit.

9. The device of claim 8, wherein the signal transmitted to each adjacent unit is transmitted with application of a time function comprising a delay, this function depending on the distance of this unit in relation to the unit having emitted the corresponding signal.

## FIG_1

## FIG.2

FIG_3

FIG_4

FIG_5

PROBABILITE
DE FRAUDE
(TERMINAL 1)

100%

70%

A

A'

$t_0$

$t_0'$

## FIG_6

PROBABILITE
DE FRAUDE
(TERMINAL 2)

100%

B + B'

35%

B

B'

$t_0'$

$t_0 + 10$ $t_0' + 3$

$\tau$

## FIG_7